# EUROPEAN PATENT APPLICATION

(11) **EP 2 775 028 A2**
(43) Date of publication of application: **10.09.2014**
(21) Application number: 14157243.8
(22) Date of filing: 28.02.2014
(51) Int. Cl.: D06F 58/24

(54) **Laundry treating apparatus**

(30) Priority: 05.03.2013 KR 20130023424
(71) Applicant: Samsung Electronics Co., Ltd, Gyeonggi-do 443-742 (KR)
(72) Inventor: Yang, Byoung Yull, Gyeonggi-do (KR); Kim, Hooi Joong, Gyeonggi-do (KR); Kim, Tai Eun, Gyeonggi-do (KR); Choi, Ho, Gyeonggi-do (KR); Lee, Jong Gyu, Seoul (KR)
(74) Representative: Walaski, Jan Filip

(57) **Abstract**

A laundry treating apparatus (1) having a condensing duct (100) for enhancing the condensing efficiency thereof, the laundry treating apparatus including a tub (3), a drum (4) installed inside the tub (3) and configured to accommodate a substance to be dried, a condensing duct (100) mounted at one side of the drum to condense moisture included in air that is discharged from the drum, at least one first path (122) provided at one side of the condensing duct and allowing air that is introduced from the drum to pass therethrough, and at least one second path (121) configured to supply condensation water that is provided to the condensing duct (100) to condense the air, and at least one condensation plate (111) located inside the condensing duct, and configured to separate the first path from the second path, so that a path allowing air to pass therethrough is separated from a path allowing condensation water to pass therethrough.

## Description

The present invention relates to a laundry treating apparatus, and more particularly, to a laundry treating apparatus having an improved structure of condensing duct for enhancing the condensing efficiency thereof.

A laundry treating apparatus is an apparatus designed to dry laundry that is wet by a washing operation, using high temperature and dry air.

In general, the laundry treating apparatus is divided into a gas-type dryer and an electric-type dryer depending on a drying operation, and divided into an exhaust type dryer and a condensing type dryer depending on a method of processing moisture absorbed from a substance to be dried.

The exhaust type dryer is configured to discharge damp air, which enters from a drum, to the outside through an elongated exhaust duct.

The condensing type dryer operates in a manner that removes moisture from damp air, which enters from a drum, through a heat exchange device to dry the damp air and then returns the dried air to the drum for circulation. In this case, since the air flow forms a closed loop, gas is may be used for a heat source but electricity is mainly used, which causes relatively high maintenance expense. However, since air is circulated between the substance to be dried in the drum and the heat exchange device, an exhaust duct is not required and thus easy installation is ensured.

A water cooled type dryer condenses air through water supplied in a condensing duct. In the water cooled type dryer, heated air is condensed while being mixed with damp air of wet clothes and water of outside, producing a low condensation efficiency. In addition, when the flow of condensation water is changed or the flow rate of condensation water is high, the condensation water flows backward and is introduced to the drum again, thereby reducing the condensing efficiency and causing a difficulty in smoothly drying the laundry.

Therefore, it is an aspect of the present disclosure to provide a laundry treating apparatus having an improved structure of a condensing duct for enhancing the condensing efficiency.

Additional aspects of the disclosure will be set forth in part in the description which follows and, in part, will be obvious from the description, or may be learned by practice of the disclosure.

In accordance with one aspect of the present disclosure, a laundry treating apparatus includes a body, a drum, a condensing duct, at least one first path, at least one second path and at least one condensation plate. The drum may be installed inside the body and configured to accommodate a substance to be dried. The condensing duct may be mounted at one side of the drum to condense moisture included in air that is discharged from the drum. The at least one first path may be provided at one side of the condensing duct and allow air that is introduced from the drum to pass therethrough, and at least one second path may be configured to supply condensation water that is provided to the condensing duct to condense the air. The at least one condensation plate may be located inside the condensing duct, and configured to separate the first path from the second path.

The at least one condensation plate may include material having a high thermal conductivity to promote heat exchange between water, being supplied through the second path, and air passing through the first path.

At least one surface of the condensation plate may be provided with a constant pattern to enlarge a surface area at which the condensation plate comes into contact with the condensation water.

At least one first path may be located at an outer side of the condensation plate and the at least one second path is located at an inner side of the condensation plate.

The at least one second path may be located at an outer side of the condensation plate and the at least one first path is located at an inner side of the condensation plate.

The at least one second path may be located at an inner side of the condensation plate and at an outer side of the condensation plate, and the at least one first path may be located between the second path located at an inner side of the condensation plate and the second path located at an outer side of the condensation plate.

A plurality of embossments may be formed on the surface of the condensation plate.

The pattern on the surface of the condensation plate may be provided in the form of a wave.

In accordance with another aspect of the present disclosure, a laundry treating apparatus includes a body, a drum, a condensing duct, at least one first path, at least one second path, and a heat exchanger. The drum may be installed inside the body and configured to accommodate a substance to be dried. The condensing duct may be mounted at one side of the drum to condense moisture included in air that is discharged from the drum. The at least one first path may be provided at one side of the condensing duct and allow air that is introduced from the drum to pass therethrough. The at least one second path may be configured to supply condensation water that is provided to the condensing duct to condense the air. The heat exchanger may be configured to separate the first path from the second path, and include at least one of an inflow adjusting part to adjust inflow of the condensation water and an outflow adjusting part to adjust outflow of the condensation water, so as to enable a heat exchange between the condensation water and the air.

The inflow adjusting part may include a condensation water inlet provided at a lower side of the heat exchanger so as to prevent condensation water from being introduced to the heat exchanger at a predetermined height or above.

The outflow adjusting part may include at least one siphon provided at one side of the heat exchanger to prevent condensation water from being discharged by a predetermined amount or above.

The outflow adjusting part may include at least one discharge hole provided at an upper side of the heat exchanger to remove lint that is introduced to the heat exchanger.

The outflow adjusting part may include an outflow valve configured to adjust such that amount of condensation water discharged from the heat exchanger is larger than amount of condensation water introduced to the heat exchanger.

The outflow valve may be a floating type discharge valve that is open and closed by condensation water being introduced and discharged into/from the heat exchanger.

In accordance with another aspect of the present disclosure, a laundry treating apparatus includes a body, a drum, a condensing duct, a heat exchanger, and a first condensation plate and a second condensation plate. The drum may be installed inside the body and configured to accommodate a substance to be dried. The condensing duct may be mounted at one side of the drum to condense moisture included in air that is discharged from the drum. The heat exchanger may include at least one first path provided at one side of the condensing duct and allowing air that is introduced from the drum to pass therethrough, and at least one second path configured to supply condensation water that is provided to the condensing duct to condense the air. The first condensation plate and the second condensation plate may be located inside the heat exchanger and configured to separate the first path from the second path. The heat exchanger may include an inflow adjusting part to adjust inflow of the condensation water and an outflow adjusting part to adjust outflow of the condensation water, so as to enable a heat exchange between the condensation water and the air.

The inflow adjusting part may include a condensation water inlet provided at a lower side of the heat exchanger so as to prevent condensation water from being introduced to the heat exchanger at a predetermined height or above. The outflow adjusting part may include at least one siphon provided inside the heat exchanger to prevent condensation water from being discharged by a predetermined amount or above.

The outflow adjusting part may include at least one discharge hole provided at an upper side of the heat exchanger to remove lint that is introduced to the heat exchanger.

A surface of at least one of the first condensation plate and the second condensation plate may be provided with a constant pattern to enlarge a surface area at which the condensation plate comes into contact with the condensation water.

As described above, a path allowing air to pass therethrough is separated from a path allowing condensation water to pass therethrough, thereby promoting the heat exchange and enhancing the condensing efficiency.

In addition, the shape of the condensing duct is improved, thereby enhancing the condensing efficiency.

In addition, the structure of a heat exchanger of the condensing duct is improved, thereby preventing condensation water from gathering at the condensing duct, and enabling foreign substance that may be attached to an outer side of the heat exchanger to be removed using the condensation water.

The laundry treating apparatus may further comprise a condensation water inlet coupled to an upper portion of the at least one condensation plate and a condensation water outlet coupled to a lower portion of the at least one condensation plate, wherein each of the condensation water inlet and condensation outlet have rib portions shaped to correspond to a shape of the at least one condensation plate.

In addition, the drum may be rotatably installed inside the body.

These and/or other aspects of the disclosure will become apparent and more readily appreciated from the following description of the embodiments, taken in conjunction with the accompanying drawings of which:
FIG. 1 is a sectional view illustrating a laundry treating apparatus in accordance with an embodiment of the present disclosure.
FIG. 2 is a diagram illustrating a state in which a front surface panel of a condensing duct is removed in accordance with an embodiment of the present disclosure.
FIG. 3 is a diagram illustrating a section taken along line 'A-A' of the condensing duct of FIG. 2.
FIG. 4 is an exploded view illustrating a condensing duct in accordance with another embodiment of the present disclosure.
FIG. 5 is a diagram illustrating a condensing duct in accordance with still another embodiment of the present disclosure.
FIG. 6 is a diagram illustrating a heat exchanger in accordance with still another embodiment of the present disclosure.
FIG. 7 is a diagram illustrating an inside of the heat exchanger of FIG. 6.
FIG. 8 is a graph showing the amount of condensation water according to a drying time in an embodiment of the present disclosure.
FIG. 9 is a diagram illustrating a heat exchanger in still another embodiment of the present disclosure.
FIG. 10 is a diagram illustrating a heat exchanger in still another embodiment of the present disclosure.
FIGS. 11A, 11B, 12A, 12B, 13A, 13B, 14A and 14B are diagrams illustrating condensing ducts in various embodiment of the present disclosure.

Reference will now be made in detail to the embodiments of the present disclosure, examples of which are illustrated in the accompanying drawings, wherein like reference numerals refer to like elements throughout.

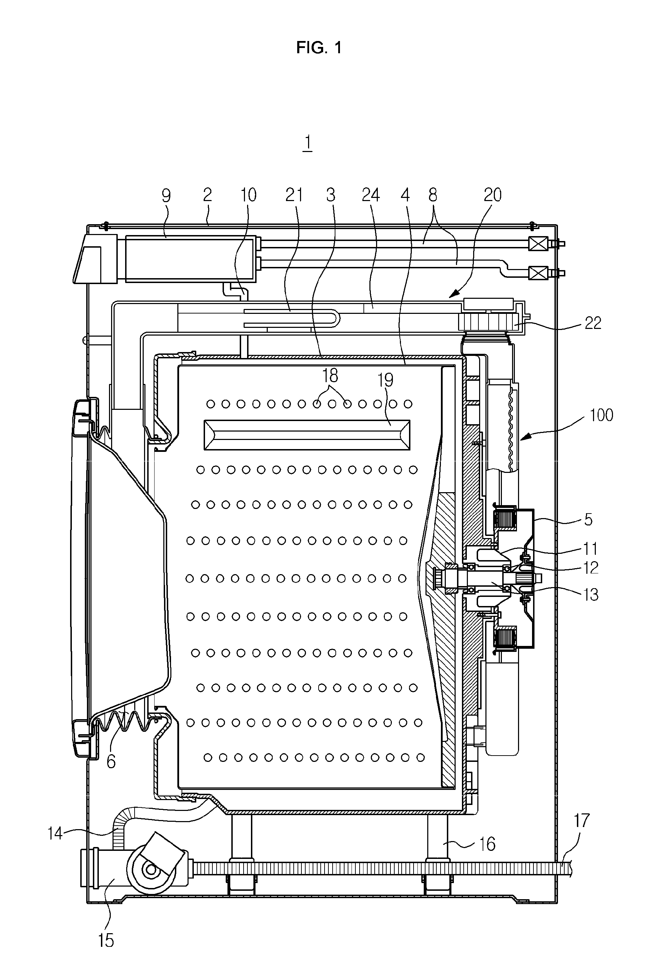

FIG. 1 is a diagram illustrating a section of a laundry treating apparatus in accordance with an embodiment of the present disclosure.

A laundry treating apparatus 1 includes a cabinet 2, a tub 3 disposed inside the cabinet 2, a drum 4 rotatably disposed inside the tub 3, and a motor 5 to drive the drum 4.

An inlet is formed through a front surface of the cabinet 2 such that a laundry is introduced to the inside of the drum 4 through the inlet.

A water supply pipe 8 to supply wash water to the tub 3 is installed at an upper side of the tub 3. One side of the water supply pipe 8 is connected to an external water supply source (not shown), and the other side of the water supply pipe 8 is connected to a detergent supply device 9.

The detergent supply device 9 is connected to the tub 3 through a connection pipe 10. Water supplied through the water supply pipe 8 is supplied inside the tub 3 together with detergent by passing through the detergent supply device 9.

The tub 3 is supported by a damper 16. The damper 16 connects an inner side lower surface of the cabinet 2 to an outer surface of the tub 3. In addition, the damper 16 may support the tub 3 while being located at upper, left and right sides of inside of the cabinet 2 in addition to the inner side lower surface.

A driving shaft 13 to deliver power of the motor 5 is connected to a rear surface of the drum 4. A plurality of through holes 18 are formed through a circumference of the drum 4 for circulation of wash water, and a plurality of lifters 19 are installed on an inner circumferential surface of the drum 4 such that a rising and falling of laundry is achieved when the drum 4 rotates.

The driving shaft 13 is disposed between the drum 4 and the motor 5. One end of the driving shaft 13 is connected to a rear surface panel of the drum 4, and the other end of the driving shaft 13 extends outside a real wall of the tub 3. As the motor 5 drives the driving shaft 13, the drum 4 connected to the driving shaft 13 rotates on the driving shaft 13.

The tub 3 is provided at the rear wall thereof with a bearing housing 11 installed to rotatably support the driving shaft 5. The bearing housing 11 may be formed of an aluminum alloy, and may be inserted into the rear wall of the tub 3 when the tub 3 is injection molded. Bearings 12 are installed between the bearing housing 11 and the driving shaft 13 such that the driving shaft 13 smoothly rotates.

The tub 3 is provided at a lower side thereof with a drain pump 15 to discharge water in the tub 3 to the outside of the cabinet 2, a connection hose 14 connecting the tub 3 to the drain pump 15 such that water in the tub 3 is introduced to the drain pump 15, and a drain house 17 to guide water, which is pumped by the drain pump 15, outside the cabinet 2.

A drying device 20 is mounted at the tub 3 configured to dry air in the tub 3 and then supply the dried air inside the tub 3 again.

The drying device 20 includes a condensing duct 100 to condense moisture of air introduced from the tub 3, a drying duct 24 to heat and dry air introduced from the condensing duct 100, and a blow fan 22 disposed between the condensing duct 100 and the drying duct 24 to form an air flow that allows air introduced to the condensing duct 100 to be introduced to the inside of the tub 3 after passing through the drying duct 24.

A heater 21 may be included in the drying duct 24 to heat the air in the drying duct 24, and a heat exchanger may be provided on the condensing duct 100 to condense moisture of air in the condensing duct 100. The heat exchanger serves to remove moisture from high temperature and damp air that has absorbed moisture included in the laundry in the drum 4. The air, moisture of which is removed, is introduced to the drying duct 24 via the blowing fan 22.

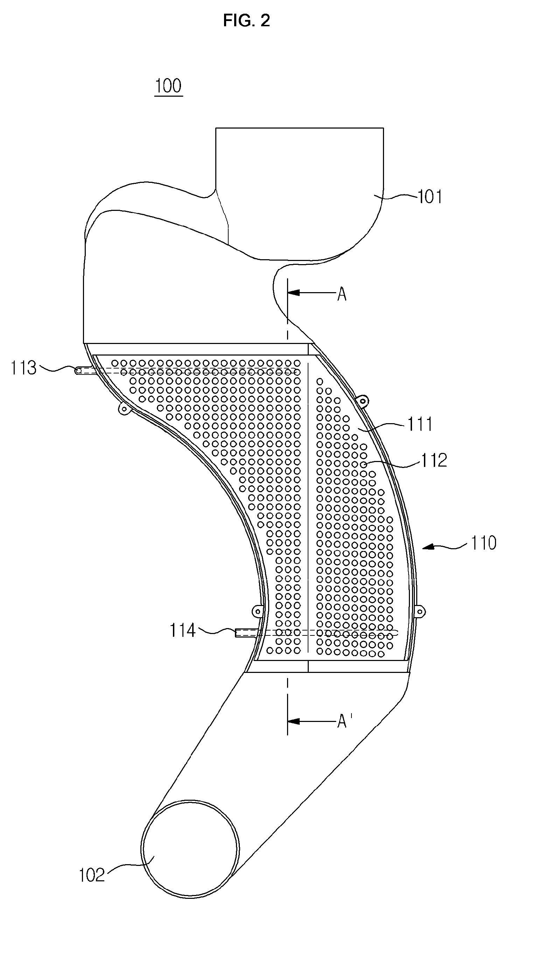

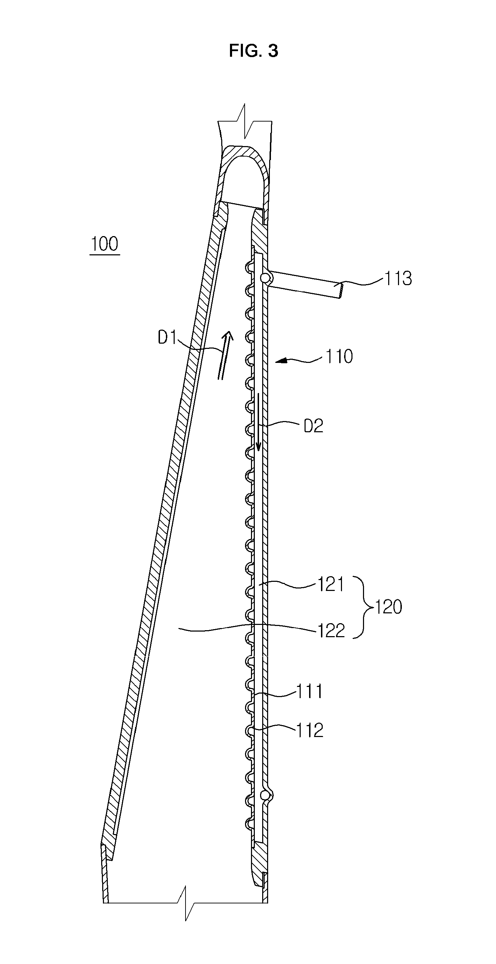

FIG. 2 is a diagram illustrating a state in which a front surface panel of a condensing duct is removed in accordance with an embodiment of the present disclosure. FIG. 3 is a diagram illustrating a section taken along line A-A' of the condensing duct of FIG. 2.

Referring to FIGS. 2 and 3, the condensing duct 100 is formed at one side thereof with a drum connecting hole 102 connected to the drum 4, and provided at the other side thereof with a drying duct connection part 101 connected to the drying duct 24.

The condensing duct 100 is provided at an inside thereof with a heat exchanger 110 in which heat exchange between air and condensation water occurs. At least one condensation plate 111 may be located inside the condensing duct 100. Referring to FIGS. 2 and 3, the condensation plate 111 may be provided in one unit thereof. A path 120, having a first path 122 and a second path 121, may be formed while interposing the condensation plate 111 therebetween. The first path 122 is a path allowing air, which is introduced from the drum 4, to pass therethrough, and the second path 121 is a path to supply condensation water, which is used to condense air. Although the condensation plate 111 is illustrated as being provided in one unit thereof to divide the first path 122 from the first path 121, the present disclosure is not limited thereto. A condensation plate may be further provided at a side or the center area inside the condensing duct 100.

Air introduced from the drum 4 through the first path 122 moves in an upper side direction D1 and is introduced to the drying duct 24. In addition, the condensation water moves in a lower side direction D2 from a upper side of the second path 121 of the duct 100 to condense the air moving along the first path 122.

A constant pattern may be formed on at least one surface of the condensation plate 111 to enhance the heat exchange efficiency. The pattern is provided to increase the surface area at which the condensation plate 111 comes into contact with the condensation water. For example, the pattern of the condensation plate 111 may be provided as a plurality of embossments 112. The embossment 112 is illustrated as being concave inward, the present disclosure is not limited thereto, and the pattern may be provided in an outward convex manner. Although the embossment 112 is illustrated as being provided at one surface of the condensation plate 111, the present disclosure is not limited thereto, and the embossment 112 may be provided at both surfaces of the condensation plate 111.

The condensation plate 111 may include material having a superior thermal conductivity to promote the heat exchanger between air and water and enhance the condensing efficiency. For example, the condensation plate 111 may be formed using aluminum and steel. In addition, the surface of the condensation plate 111 may be subject to a coating to prevent the condensation plate 111 from corroding due to detergent and condensation water.

The condensing duct 100 is provided at one side thereof with a condensation water inlet 113 to receive condensation water that is used to condense air inside the condensing duct 100. The condensation water is supplied through the condensation water inlet 113, and moves in the lower side direction D2 of the condensing duct 100. The condensation water is discharged through a condensation outlet 114 formed at one side of the condensing duct 100. The condensation outlet 114 may be provided at a lower side of the heat exchanger 110.

Air introduced from the drum 4 moves in the upper side direction D1 of the condensing duct 100 through the drum connecting hole 102. The condensation plate 111 is located between the second path 121, representing a path allowing condensation water to pass therethrough, and the first path 122, representing a path allowing air to pass therethrough.

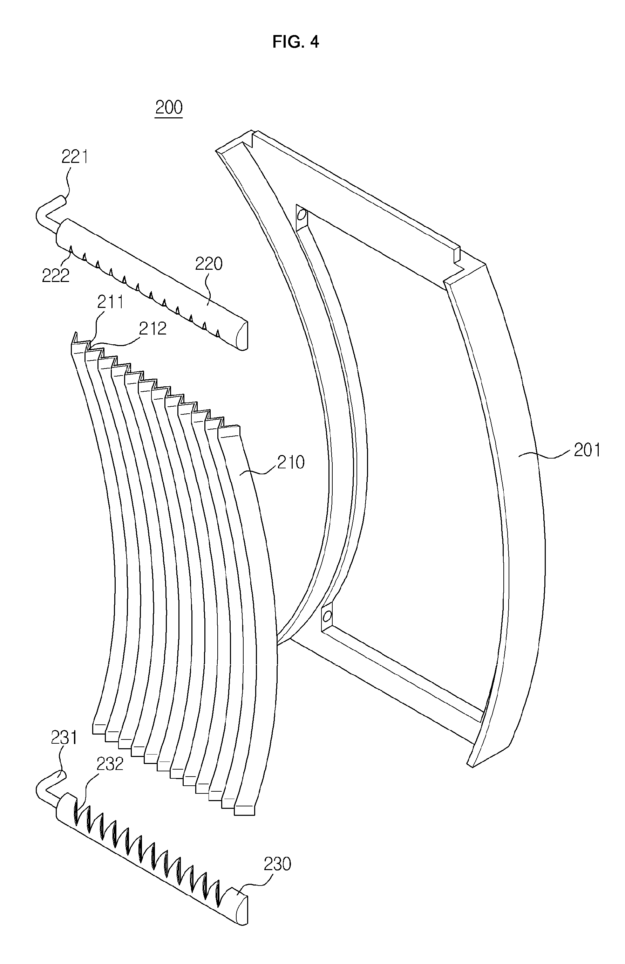

In the conventional technology, air makes direct contact with condensation water to condense the air, and in this case, the condensation water may flow backward due to air, or the flow rate of the condensation water is hardly increased due to the air. In addition, if the drying is performed to some extent, the humidity of the air is increased and thus moisture is contained in the air. Accordingly, the drying efficiency is reduced. In accordance with an embodiment of the present disclosure, since the condensation plate 111 separates the first path 122, representing a path allowing air to pass therethrough from the second path 121 configured to supply condensation water, and a difference of heat transfer on the surface of the condensation plate 111 is used, the heat exchange is efficiently generated, thereby enhancing the condensing efficiency of air. In addition, the embossment 112 formed on the surface of the condensation plate 111 enlarges a contact surface between air and condensation air, thereby enhancing the condensing efficiency. FIG. 4 is an exploded view illustrating a condensing duct in accordance with another embodiment of the present disclosure.

Referring to FIG. 4, A condensing duct 200 may have a condensing duct case 201 and a condensing plate 210. The condensing duct 200 may be the same as the previous embodiment in that the condensation plate 210 divides a first path allowing air to pass therethrough from a second path configured to supply condensation water, but is different from the previous embodiment in that the condensation plate 210 has a shape different from that of the condensation plate 111 shown in FIGS. 2 and 3.

In accordance with this embodiment of the present disclosure, the condensation plate 210 may be provided with a waveform having a shape of a wave. Accordingly, at least one portion of the condensation plate 210 may be formed to be curved. The condensation plate 210 includes a first portion 211 provided to be concave toward one surface of the condensing duct 200, and a second portion 212 provided to be concave toward the other surface of the condensing duct 200. The first portion 211 and the second portion 212 may be alternately provided. Such a structure may increase the area at which air comes into contact with the condensation plate 210 and thus enhance the condensing efficiency.

A condensation water inlet 221 may be coupled to an upper portion of the condensation plate 210 to supply condensation water while being coupled to the condensation plate 210. The condensation water inlet 221 may be provided in a tubular shape. In addition, the condensation water inlet 221 may include a rib 220 having a shape 222 corresponding to a shape of a trough formed by the first portion 211 and the second portion 212 such that the condensation water inlet 221 is coupled to the first portion 211 and the second portion 212 of the condensation plate 210.

In addition, a condensation water outlet 231 may be provided at a lower portion of the condensation plate 210 to discharge the supplied condensation water while being coupled to the condensation plate 210. Similar to the condensation water inlet 221, the condensation water outlet 231 may be also provided in a tubular shape. In addition, the condensation water outlet 231 may include a rib 230 having a shape 232 corresponding to a shape of a trough formed by the first portion 211 and the second portion 212. Each of the condensation water inlet 221 and the condensation water outlet 231 may be coupled in perpendicular to the condensation plate 210.

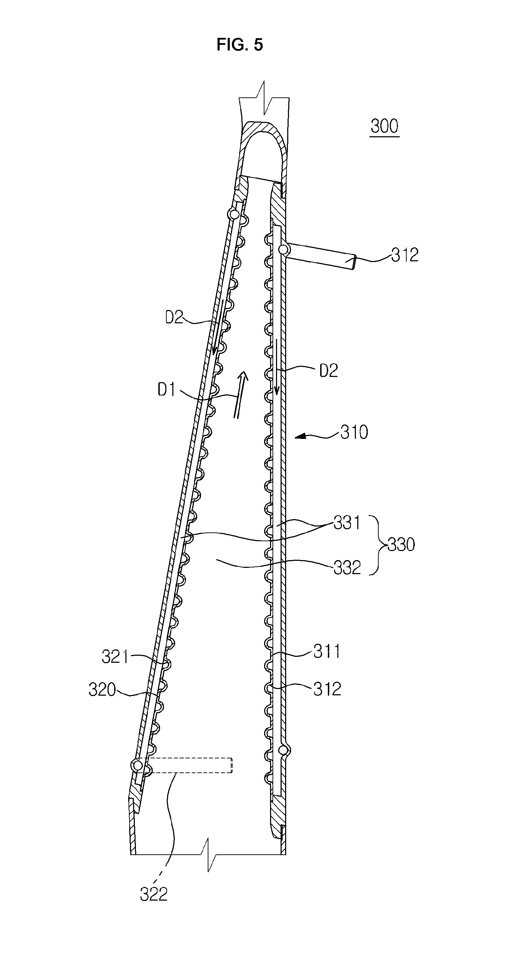

FIG. 5 is a diagram illustrating a condensing duct in accordance with still another embodiment of the present disclosure.

In accordance with this embodiment, a condensing duct 300 is provided at an inside thereof with a heat exchanger 310 in which heat exchange between air and condensation water occurs and with a plurality of condensation plates including a first condensation plate 311 and a second condensation plate 320. Accordingly, a path 330 may be divided into three paths. A first path 332 allowing air to pass therethrough may be provided between the first condensation plate 311 and the second condensation plate 320. A plurality of second paths 331 allowing condensation water to pass therethrough may be provided at an outer side of the first condensation plate 311 and at an outer side of the second condensation plate 320. Air moving upward along the first path 332 and condensation water moving downward along the second path 331 have heat exchange by making indirect contact with each other through the plurality of condensation plates 311 and 320, thereby condensing air. In accordance with this embodiment of the present disclosure, the second path 331 is provided in plural numbers due to the first condensation plate 311 and the second condensation plate 320 and condenses air of the first path 332 at both sides, thereby enhancing the condensing efficiency.

In accordance with this embodiment of the present disclosure, the second path is provided in plural numbers, but the present disclosure is not limited thereto. For example, the first path may be provided in plural numbers.

A condensation water inlet 312 to receive condensation water may be provided at an upper portion of the condensing duct 300, and a condensation water outlet 322 to discharge condensation water may be provided at a lower portion of the condensing duct 300. In addition, embossments 312 and 321 capable of enhancing the condensing efficiency may be provided on at least one surface of each of the first condensation plate 311 and the second condensation plate 320 to enhance the condensing efficiency.

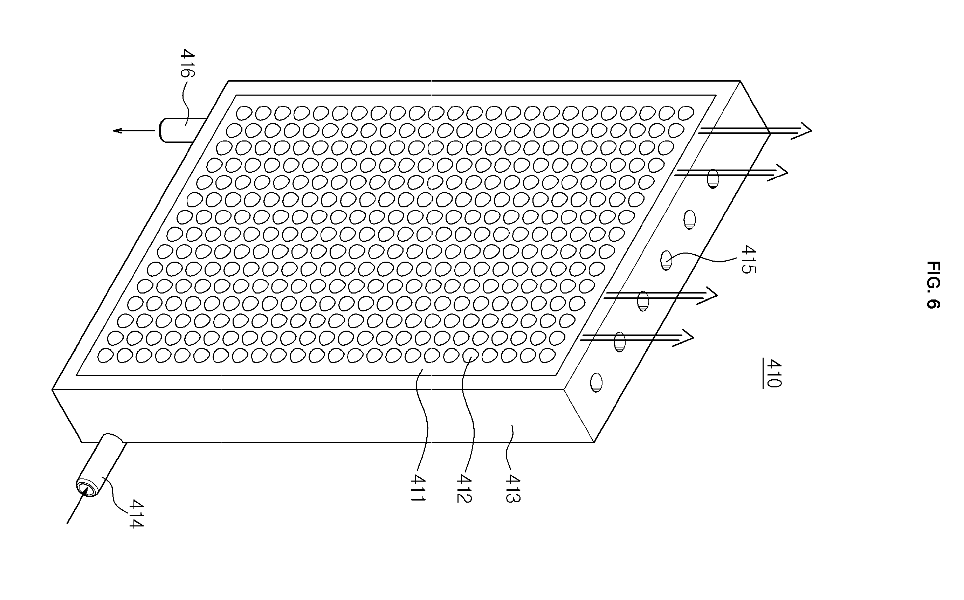

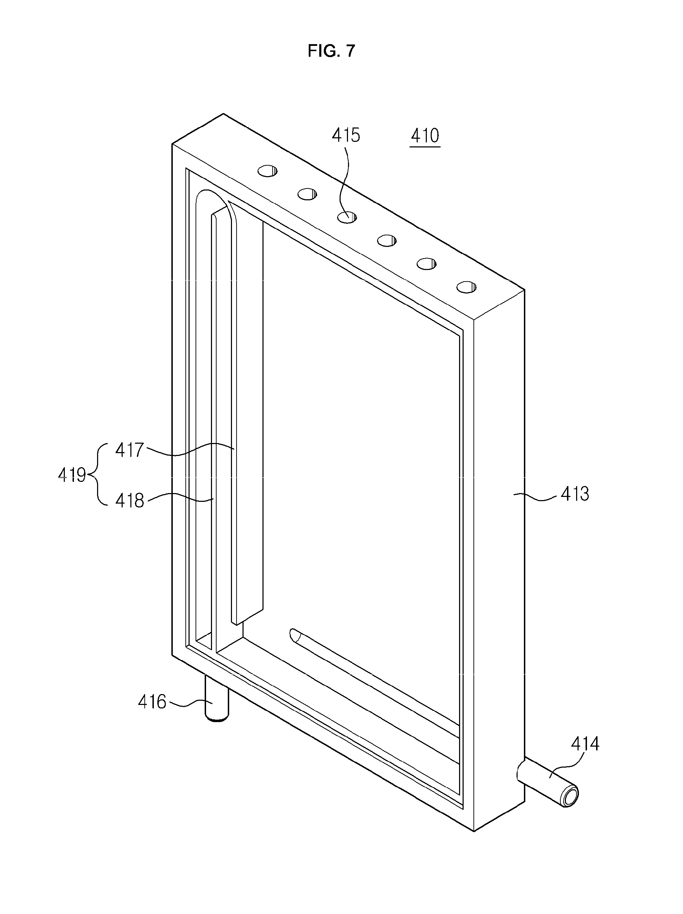

FIG. 6 is a diagram illustrating a heat exchanger in accordance with still another embodiment of the present disclosure, and FIG. 7 is a diagram illustrating an inside of the heat exchanger of FIG. 6.

Referring to FIGS. 6 and 7, a heat exchanger 410 may be located inside a condensing duct. The heat exchanger 410 may have a heat exchange case 413. Condensation water is supplied to inside of the heat exchanger 410, and air passes through outside of the heat exchanger 410, such that heat exchange between air and condensation water occurs. The heat exchanger 410 separates a first path (not shown) allowing air to pass therethough from a second path (not shown) allowing condensation water to pass therethrogh.

An inflow adjusting part is provided at one side of the heat exchanger 410 to adjust inflow of condensation water. The inflow adjusting part may be provided at a lower side of the heat exchanger 410. The inflow adjusting part may include a condensation water inlet 414 allowing condensation water to be introduced therethrough. Since the condensation water inlet 414 is provided in a tubular shape, the condensation water is prevented from being instantly introduced into the inside the heat exchanger 410.

At least one surface of an outer surface 411 of the heat exchanger 410 may be provided with a constant pattern. For example, an embossment 412 may be provided on the at least one surface of the outer surface 411 of the heat exchanger 410. Such a structure may increase the area at which air comes into contact with condensation water, thereby enhancing the heat exchange efficiency and thus enhancing the condensing efficiency.

An outflow adjusting part may be provided at one side of the heat exchanger 410 to prevent condensation water from being discharged by a predetermined amount or above. In accordance with this embodiment, the outflow adjusting part may include at least one siphon 419 provided at one side of the heat exchanger 410. In accordance with this embodiment, the siphon 419 is provided in a U-trap, but the present disclosure is not limited thereto. For example, the siphon may be provided in various shapes such as a Strap and a P-trap. The siphon 419 may include a first section 417 and a second section 418. The condensation water introduced to the heat exchanger 410 through the condensation water inlet 414 starts to fill in the first section 417, and only after filling in first section 417, is discharged through the condensation water outlet 416 via the second section 418. Since condensation water, only after filing in the first section 417, is discharged, the condensation water is filled in the heat exchanger 410 without being discharged before the amount of condensation water introduced reaches to a predetermined level.

In addition, since the condensation water inlet 414 is provided at a lower side of the heat exchanger 410, the condensation water is discharged only after filled at a predetermined height or above, so that the air is efficiently condensed with a significantly small amount of condensation water.

At least one discharge hole 415 may be formed at an upper side of the heat exchanger 410. The discharge hole 415 serves to discharge condensation water when condensation water is excessively supplied and thus filled in the heat exchanger 410 to a predetermined level or above. In addition, even when foreign substance such as lint is filled in the heat exchanger 410, the lint may be removed while condensation water flows through the discharge hole 415.

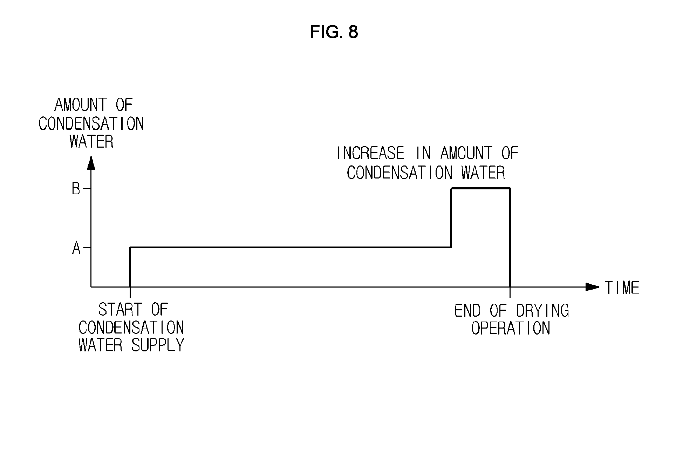

FIG. 8 is a graph showing the amount of condensation water according to drying time in an embodiment of the present disclosure.

Referring to FIG. 8, after a predetermined time since a drying operation starts, if the temperature of inside of the drum reaches to a first temperature (ti), air discharged from the drum is condensed by supplying a predetermined amount (A) of condensation water. If a predetermined time elapses or the temperature of inside of the drum reaches to a second temperature (t2), the amount of condensation water to be supplied is increased to a predetermined amount (B).

While the condensation water of the amount (A) is being supplied, the condensation water inside the heat exchanger condenses air on the surface of the heat exchanger, thereby drying the clothes. The condensation water is supplied by the amount (B) that is larger than the amount (A) as the drying operation is performed for a predetermined time, and in this case, the condensation water is discharged outside by overflowing through the discharge hole provided at the upper side of the heat exchanger. The condensation water flows along an outer wall of the heat exchanger, and thus washes the foreign substance, such as lint, attached to the outside of the heat exchanger.

In the case in which the amount of the condensation water is increased to the amount (B), the blower fan provided inside the drying duct is set to have a lower speed, thereby preventing the condensation water overflowing from the heat exchanger from backflowing to the upper side of the condensing duct.

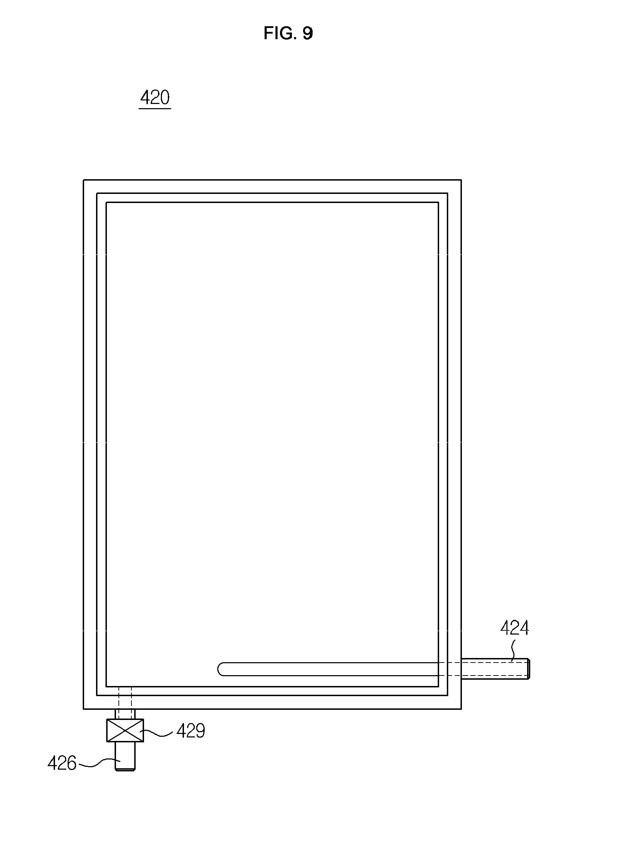

FIG. 9 is a diagram illustrating a heat exchanger in still another embodiment of the present disclosure.

Referring to FIG. 9, condensation water is introduced to the inside of the heat exchanger 420 through the condensation water inlet 424 and is discharged through the condensation water outlet 426. On the heat exchanger 420, an outflow adjusting part is provided in the form of an outflow valve 429.

The outflow valve 429 is a valve configured to adjust such that the amount of condensation water discharged is larger than the amount of condensation water introduced to the heat exchanger 420. For example, the outflow valve 429 is in an OFF state before the condensation water is filled at a predetermined height or above inside the heat exchanger 420, and is in an ON state if the condensation water is filled at the predetermined height or above, thereby adjusting the amount of condensation water inside the heat exchanger 420.

Since the outflow valve 429 adjusts the amount of supplied condensation water and the amount of discharged condensation water, the amount of condensation in the heat exchanger 420 is kept constant during the drying operation, thereby enhancing the condensing efficiency and thus enabling a smooth drying operation.

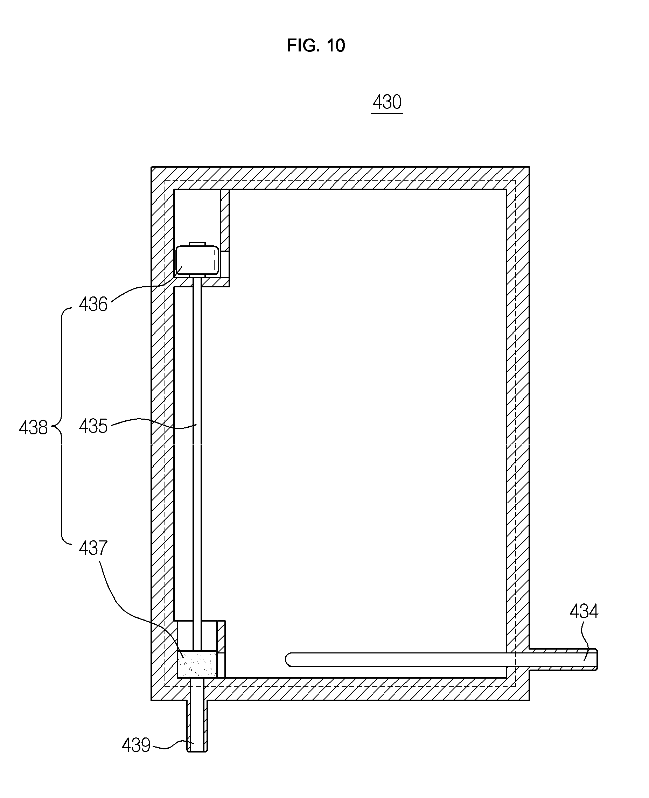

FIG. 10 is a diagram illustrating a heat exchanger in still another embodiment of the present disclosure.

Referring to FIG. 10, an outflow valve forming the outflow adjusting part may be provided a floating type discharge valve 438 that uses buoyancy of condensation water.

The floating type outflow valve 438 comprises an ON/OFF part 437 to open and close a condensation water outlet 439, and a float 436 to move the ON/OFF part 437 by buoyancy. The float 436 is connected to the ON/OFF part 437 through a connection member 435.

The condensation water is introduced to the inside of the heat exchanger 430 through a condensation water inlet 434. Before the introduced condensation water is filled at a predetermine height or above, the float 436 does not move, and the ON/OFF part 437 closes the condensation water outlet 439. In a case in which the condensation water is filled in the heat exchanger 430 at the predetermined height or above, the float 436 rises upward due to the buoyancy, and thus the ON/OFF part 437 also moves. Since the ON/OFF part 437 moves upward, the condensation water outlet 439 is open, and the condensation water inside the heat exchanger 439 is discharged.

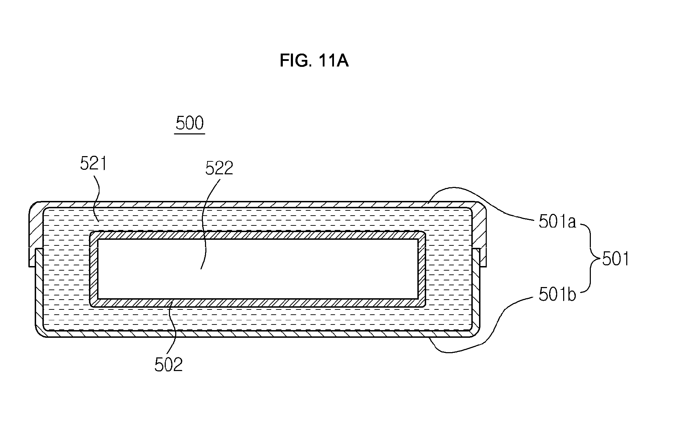

Although the outflow valve is illustrated as using buoyancy, the present disclosure is not limited thereto, and may be provided in various types of outflow valves using a checker method, an electrostatic charge method, and a current sensing method. FIGS. 11A, 11B, 12A, 12B, 13A, 13B, 14A and 14B are diagrams illustrating condensing ducts in various embodiment of the present disclosure.

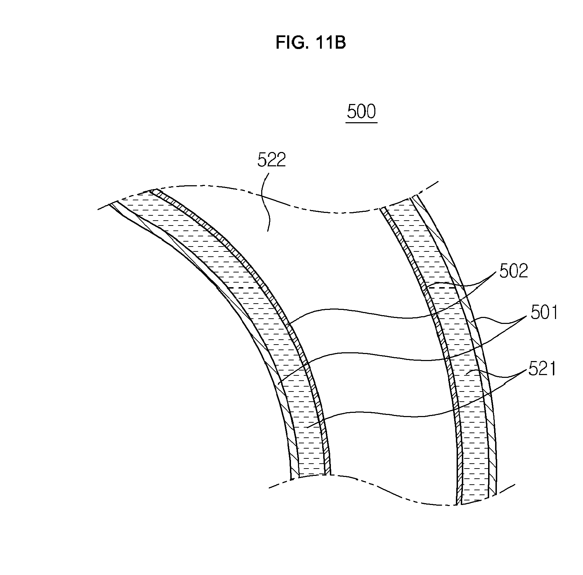

FIG. 11A is a cross sectional view showing a condensing duct in accordance with an embodiment of the present disclosure, and FIG. 11B is a longitudinal sectional view showing a condensing duct in accordance with an embodiment of the present disclosure.

Referring to FIGS. 11A and 11B, a condensing duct 500 includes a housing 501 forming the external appearance of the condensing duct. The housing 501 includes a front surface housing 501a and a rear surface housing 501b. The housing 501 is provided at an inside thereof with a first path 522 allowing air to pass therethrough, and a second path 521 allowing condensation water to pass therethrough. The first path 522 allowing air to pass therethrough is located at a center of the condensing duct 500, and the second path 521 allowing condensation water to pass therethrough is located at an outer side of the first path 522.

A condensation plate 502 may be located between the first path 522 and the second path 521. The condensation plate 502 is provided in the form of a tube such that the first path 522 may be located at an inner side of the condensation plate 502 and the second path 521 may be located at an outer side of the condensation plate 521.

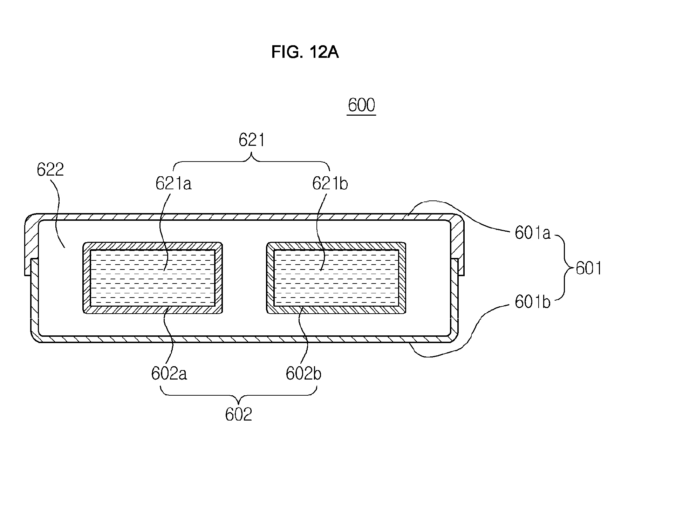

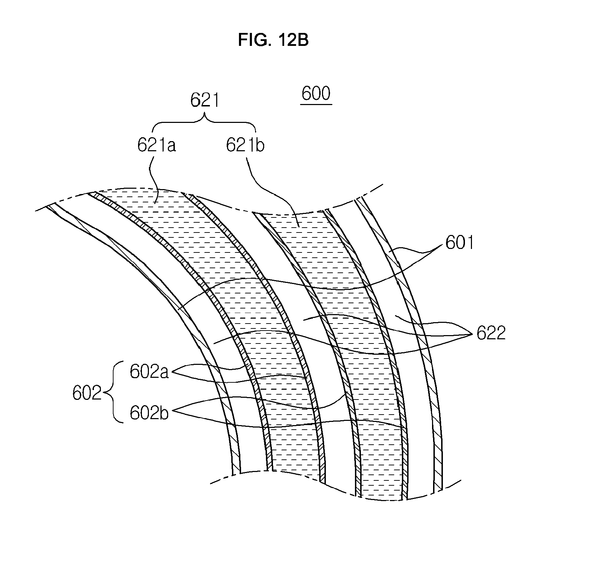

FIG. 12A is a cross sectional view showing a condensing duct in accordance with an embodiment of the present disclosure, and FIG. 12B is a longitudinal sectional view showing a condensing duct in accordance with an embodiment of the present disclosure. Referring to FIGS. 12A and 12B, a condensing duct 600 includes a housing 601 having a front surface housing 601a and a rear surface housing 601b. The condensing duct 600 is provided at an inside thereof with a first path 622 allowing air to pass therethrough, and a second path 621 allowing condensation water to pass therethrough. The second path 621 may be located at a center of the condensing duct 600, and the first path 622 may be located at an outer side of the second path 621. The second path 621 may be provided in plural numbers. The second path 621 may be provided at inner side of tub-shaped condensation plates 602.

As shown in FIGS. 12A and 12B, the second path 621 is provided in two units 621a and 621b thereof. Each of the second path 621a and the second path 621b may be provided at inner sides of tub-shaped condensation plates 602a and 602b, respectively. The first path 622 may be provided between the condensation plates 602a and 602b.

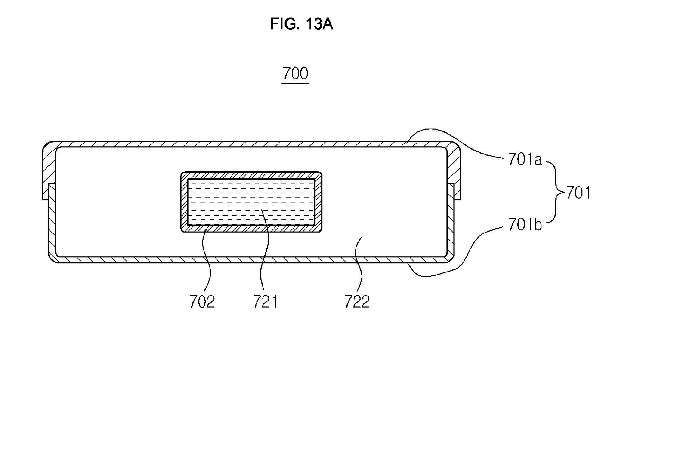

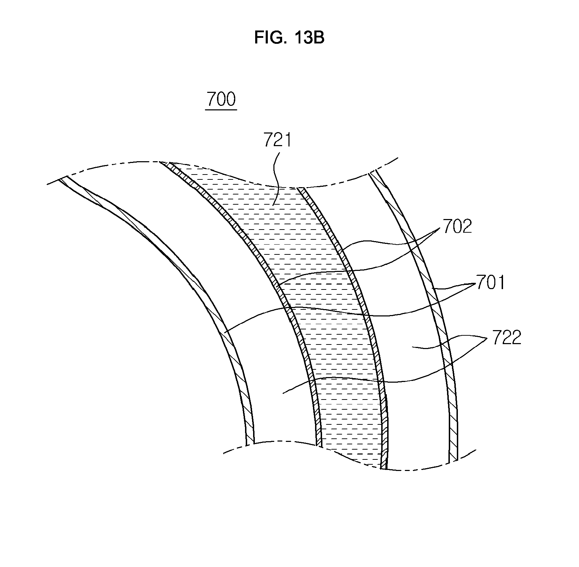

FIG. 13A is a cross sectional view showing a condensing duct in accordance with an embodiment of the present disclosure, and FIG. 13B is a longitudinal sectional view showing a condensing duct in accordance with an embodiment of the present disclosure. Referring to FIGS. 13A and 13B, a condensing duct 700 includes a housing 701 having a front surface housing 701a and a rear surface housing 701b. The condensing duct 700 is provided at an inside thereof with a first path 722 allowing air to pass therethrough, and a second path 721 allowing condensation water to pass therethrough. The second path 721 allowing condensation water to pass therethrough may be located at a center of the condensing duct 700, and the first path 722 allowing air to pass therethrough may be located at an outer side of the second path 721.

A condensation plate 702 may be located between the first path 722 and the second path 721. The condensation plate 702 may be provided in the form of a tube. The second path 721 is located inside the condensation plate 702, and the first path 722 is located outside the condensing plate 702.

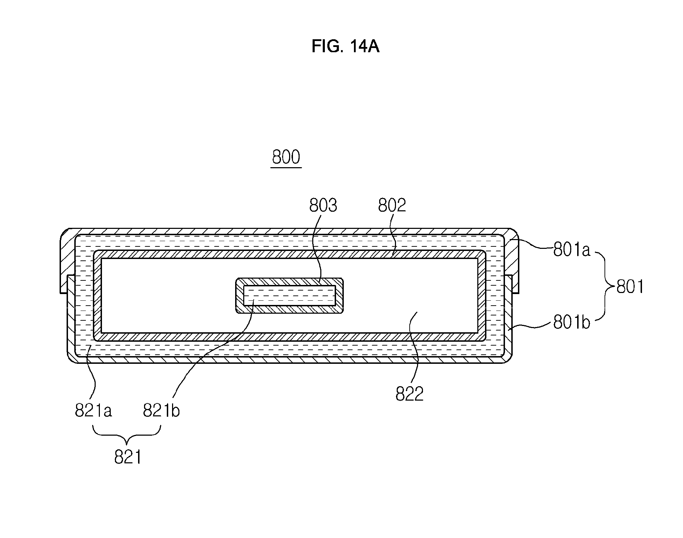

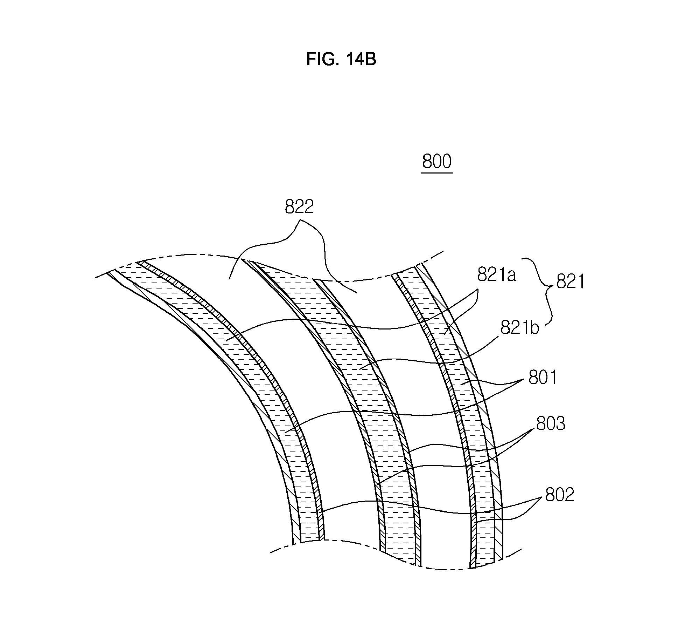

FIG. 14A is a cross sectional view showing a condensing duct in accordance with an embodiment of the present disclosure, and FIG. 14B is a longitudinal sectional view showing a condensing duct in accordance with an embodiment of the present disclosure.

Referring to FIGS. 14A and 14B, a condensing duct 800 includes a housing 801 having a front surface housing 801a and a rear surface housing 801b. The condensing duct 800 is provided at an inside thereof with a first path 822 allowing air to pass therethrough, and second paths 821 allowing condensation water to pass therethrough while including a second path 821a and a second path 821b. Each of the first paths 822 and the second path 821 may be alternately provided each other.

As shown in FIGS. 14A and 14B, the second paths 821 allowing condensation water to pass therethrough is provided in plural numbers at an inside the condensing duct 800. Condensation plates 802 and 803, each provided in a tube shape, include a first condensation plate 803 located at a center of the condensing duct 800 and a second condensation plate 802 provided at an outer side of the first condensation plate 803. The first condensation plate 803 may be provided at an inner side of the second condensation plate 802.

The second path 821b allowing condensation water to pass therethrough is located at an inner side of the first condensation plate 803. The first path 822 allowing air to pass therethrough is located between the first condensation plate 803 and the second condensation plate 802. The second path 821a allowing condensation water to pass therethrough is provided at an outer side of the second condensation plate 802.

In accordance with an embodiment of the present disclosure illustrated in FIG. 14, the first path 822 allowing air to pass therethrough is located between the second paths 821 allowing condensation water to pass therethrough, and the contact area between air and condensation water is increased, thereby enhancing the condensing efficiency.

As described above, the condensing duct including the condensation plate is provided in various forms. Although not shown, a protrusion (not shown) may be provided by protruding a portion of the condensation plate. In addition, a wrinkle part (not shown) including a crest and a trough alternately formed each other may be provided. In this case, turbulence is generated in air and condensation water and thus the heat exchange is promoted.

Although a few embodiments of the present invention have been shown and described, it would be appreciated by those skilled in the art that changes may be made in these embodiments without departing from the principles of the invention, the scope of which is defined in the claims.

## Claims

1. A laundry treating apparatus comprising:
a body;
a drum installed inside the body and configured to accommodate a substance to be dried;
a condensing duct mounted at one side of the drum to condense moisture included in air that is discharged from the drum;
at least one first path provided at one side of the condensing duct to allow air that is introduced from the drum to pass therethrough, and at least one second path configured to supply condensation water that is provided to the condensing duct to condense the air; and
at least one condensation plate located inside the condensing duct, and configured to separate the first path from the second path.

2. The laundry treating apparatus of claim 1, wherein the at least one condensation plate comprises material having a high thermal conductivity to promote heat exchange between water, being supplied through the at least one second path, and air passing through the at least one first path.

3. The laundry treating apparatus of claim 1 or 2, wherein at least one surface of the at least one condensation plate is provided with a constant pattern to enlarge a surface area at which the at least one condensation plate comes into contact with the condensation water.

4. The laundry treating apparatus of claim 1, 2 or 3, wherein the at least one first path is located at an outer side of the at least one condensation plate and the at least one second path is located at an inner side of the at least one condensation plate.

5. The laundry treating apparatus of any one of claims 1 to 3, wherein the at least one second path is located at an outer side of the at least one condensation plate and the at least one first path is located at an inner side of the at least one condensation plate.

6. The laundry treating apparatus of any one of claims 1 to 3, wherein the at least one second path is located at an inner side of the at least one condensation plate and at an outer side of the at least one condensation plate, and the at least one first path is located between the at least one second path located at an inner side of the at least one condensation plate and the at least one second path located at an outer side of the at least one condensation plate.

7. The laundry treating apparatus of claim 1, wherein the drum is rotatably installed inside the body.

8. The laundry treating apparatus of any one of the preceding claims when dependent on claim 3, wherein a plurality of embossments are formed on the surface of the at least one condensation plate.

9. The laundry treating apparatus of any one of claims 1 to 7 when dependent on claim 3, wherein the pattern on the surface of the at least one condensation plate is provided in the form of a wave.

10. The laundry treating apparatus of any one of the preceding claims, further comprising a condensation water inlet coupled to an upper portion of the at least one condensation plate and a condensation water outlet coupled to a lower portion of the at least one condensation plate,
wherein each of the condensation water inlet and condensation outlet having rib portions shaped to correspond to a shape of the at least one condensation plate.
